# EUROPÄISCHE PATENTSCHRIFT

(11) **EP 3 149 536 B1**
(45) Veröffentlichungstag und Bekanntmachung des Hinweises auf die Patenterteilung: **21.03.2018**
(21) Anmeldenummer: 15726078.7
(22) Anmeldetag: 22.05.2015
(51) Int. Cl.: G02B 27/00, G02B 21/22, G02B 5/00, G02B 21/02

(54) **OPTISCHES GERÄT ZUR ERZEUGUNG VON BILDERN MIT RÄUMLICHEM EINDRUCK**
OPTICAL DEVICE FOR GENERATING IMAGES WITH THREE-DIMENSIONAL EFFECT
APPAREIL OPTIQUE POUR GÉNÉRER DES IMAGES AVEC UN EFFET TRIDIMENSIONNEL

(30) Priorität: 27.05.2014 DE 102014107432
(43) Veröffentlichungstag der Anmeldung: 05.04.2017
(73) Patentinhaber: ATMOS MedizinTechnik GmbH & Co. KG, 79853 Lenzkirch (DE)
(72) Erfinder: CZANIERA, Jürgen, 79848 Bonndorf (DE)
(74) Vertreter: Westphal, Mussgnug & Partner Patentanwälte mbB
(86) Internationale Anmeldenummer: PCT/EP2015/061448
(87) Internationale Veröffentlichungsnummer: WO 2015/181095

(56) Entgegenhaltungen:
- DE-A1-102004 006 066
- DE-A1-102011 100 997
- GB-A- 2 263 344
- US-A1- 2011 261 445
- US-B1- 6 348 994

## Beschreibung

Die Erfindung betrifft ein Optisches Gerät zur Erzeugung von Bildern mit räumlichem Eindruck mit den Merkmalen des Oberbegriffs des Anspruchs 1.

Optische Geräte zur Erzeugung von Bildern mit räumlichem Eindruck nutzen die Fähigkeit des menschlichen Gehirns zum räumlichen Sehen aus, d.h. die Fähigkeit des menschlichen Gehirns, Informationen aus Einzelbildern so miteinander zu verschmelzen und/oder miteinander verschmolzene Informationen aus Einzelbildern so zu analysieren, dass ein dreidimensionaler Gesamteindruck beim Betrachter verbleibt.

Mit anderen Worten werden also durch solche optische Geräte zwei Beobachtungskanäle mit unterschiedlichen optischen Eigenschaften wie z.B. unterschiedlichen Strahlengängen, unterschiedlichen Lichtpolarisationen und/oder unterschiedlichen Lichtfarben , bereitgestellt, die dem Betrachter Informationen aus zwei unterschiedlichen, von den Augen des Betrachters wahrgenommenen Bildern des beobachteten Objekts zur Verfügung stellen, was dann zu einer dreidimensionalen Wahrnehmung des Objekts führt. Wichtig ist dabei, dass eine Informationsverschmelzung stattfindet. Diese wird vom Gehirn vorgenommen, wenn die beiden Augen eines Betrachters gleichzeitig die beiden Beobachtungskanäle betrachten können, wie es beispielsweise bei einem Stereomikroskop der Fall ist.

Derselbe Effekt lässt sich aber insbesondere bei statischen oder nahezu statischen Beobachtungsobjekten, die sich nicht oder nur langsam bewegen, auch erzielen, wenn die beiden Beobachtungskanäle nicht zeitgleich, sondern zu unterschiedlichen Zeitpunkten bereitgestellt werden, beispielsweise durch ein sehr schnelles Hin- und Herschalten zwischen zwei Beobachtungskanälen oder dadurch, dass Bilder eines ersten Beobachtungskanals und Bilder eines zweiten Beobachtungskanals aufgenommen werden, beispielsweise mit einer Kamera oder Videokamera, und dann im Wege der -insbesondere elektronischen- Bildverarbeitung miteinander verschmolzen und im verschmolzenen Zustand betrachtet werden. Dementsprechend kann der räumliche Effekt auch bei optischen Instrumenten, die zu einem gegebenen Zeitpunkt nur einen Beobachtungskanal aufweisen, z.B. bei einem Videomikroskop oder Endoskop, erreicht werden, wenn die optischen Eigenschaften des einen Beobachtungskanal variabel sind, z.B. durch Einfügen von variablen oder austauschbaren Blenden zur Beeinflussung des Strahlengangs und/oder von variablen oder austauschbaren Filtern zur Beeinflussung von Polarisation und/oder Farbe des Lichtes. Schon hier sei auf die unten näher erläuterte Tatsache hingewiesen, dass auch durch eine geeignete Kombination und Platzierung von Polarisations- oder Farbfiltern die Wirkung einer Blende, eine Apertur oder Durchlassöffnung im Strahlengang zu definieren, erzielt werden kann, weshalb unter den Begriff einer "Blende" im Sinne dieser Offenbarung auch entsprechende Kombinationen von Polarisations- oder Farbfiltern zu verstehen sind.

Die vielleicht gängigste Art von optischen Instrumenten zur Erzeugung von Bildern mit räumlichem Eindruck sind Stereomikroskope.

Stereomikroskope bilden eine Unterart der Lichtmikroskope, die sich dadurch auszeichnet, dass sie zumindest abschnittsweise unterschiedliche Strahlengänge in den Beobachtungskanälen für die beiden Augen eines Betrachters aufweisen, wobei Stereomikroskope vom Greenough-Typ ein Objektiv pro Beobachtungskanal und Stereomikroskope vom Abbe-Typ ein gemeinsames Hauptobjektiv für beide Beobachtungskanäle aufweisen. Als Ergebnis der Bereitstellung von zwei Beobachtungskanälen mit unterschiedlichen Strahlengängen verarbeitet das Gehirn des Betrachters zwei unterschiedliche, von den Augen des Betrachters wahrgenommene, Bilder des durch das Stereomikroskop beobachteten Objekts, was zu einer dreidimensionalen Wahrnehmung des Objekts führt.

Aus diesem Grund finden Stereomikroskope in vielen Bereichen Anwendung, in denen es um eine Bearbeitung von Objekten unter dreidimensionaler Sicht geht, insbesondere in der Medizin und dort unter anderem als Operationsmikroskope.

Ein Problem von optischen Instrumenten zur Erzeugung von Bildern mit räumlichem Eindruck im Allgemeinen und im Besonderen von Stereomikroskopen liegt allerdings darin, dass die gewünschte dreidimensionale Wahrnehmung nur dann realisiert werden kann, wenn eine hinreichend große Schärfentiefe erreicht wird. Dafür wird eine geringe numerische Apertur benötigt, was neben einer Verdunklung des erhaltenen Bildes auch die erreichbare Auflösung begrenzt, aber die Kosten für das Mikroskop reduziert.

Im Gegensatz dazu kann man bei Verwendung von großen numerischen Aperturen mit hohem optischen Aufwand und demzufolge hohen Kosten helle, hochaufgelöste Bilder erhalten, aber unter diesen Bedingungen ist die erreichbare Schärfentiefe, also der Bereich, in dem ein Objekt scharf abgebildet wird, gering und als Konsequenz verschwinden die 3D-Effekte bei der Beobachtung des Objekts. Aus diesem Grund sind optische Instrumente zur Erzeugung von Bildern mit räumlichem Eindruck, insbesondere Stereomikroskope, mit hoher Auflösung kaum realisierbar.

Wie bereits erwähnt, kann die erreichte Schärfentiefe durch Reduktion der numerischen Apertur erhöht werden. Daher hat man bereits Stereomikroskope entwickelt, bei denen der Benutzer die numerische Apertur der Beobachtungskanäle mit verstellbaren Blenden, z.B. in Form von Irisblenden, anpassen kann, was, wenn die Anpassung von Hand erfolgt, gegebenenfalls bei einem Benutzerwechsel unterlassen wird, so dass ein späterer Benutzer unter suboptimalen Bedingungen arbeitet.

Deswegen wird z.B. in der DE 10 2004 006 066 B4 vorgeschlagen, für hinsichtlich ihrer Größe anpassbare Aperturblenden eine Steuereinheit vorzusehen, welche die Größe der Öffnung der Aperturblende in Abhängigkeit von den gewählten Beobachtungsparametern, insbesondere der gewählten Vergrößerung, automatisch anpasst. Allerdings führt auch eine solche automatische Einstellung in der Praxis meist nicht zu optimalen Beobachtungserlebnissen, was letztlich darauf zurückzuführen ist, dass die beste Einstellung des Mikroskops von den Augen des Benutzers abhängt, so dass eine standardisierte Einstellung zwar grobe Fehleinstellungen zu vermeiden mag, zugleich aber einer individualisierten Anpassung entgegen steht.

Einen interessanten anderen Ansatz zur Bereitstellung der gewünschten Schärfentiefe beschreibt die DE 10 2006 036 300 B4. Diese Druckschrift schlägt vor, die beiden Beobachtungskanäle insbesondere hinsichtlich ihrer numerischen Apertur unterschiedlich auszugestalten und verlässt sich auf die Fähigkeit des Gehirns zur Kombination der Informationen aus den beiden unterschiedlichen Beobachtungskanälen. Das dort beschriebene Stereomikroskop hat also einen Beobachtungskanal mit einer geringen numerischen Apertur, hoher Schärfentiefe und einem dunklen Bild, das aber gegebenenfalls eine schlechtere Auflösung hat als die optische Vergrößerung nominell erlauben würde und einen Beobachtungskanal mit einer hohen numerischen Apertur, geringer Schärfentiefe und einem hohen Auflösungsvermögen.

Diese Lösung bringt aber auch eine Reihe von Nachteilen mit sich. Erstens werden Kostenvorteile, die durch einen im Wesentlichen gleichen Aufbau der beiden Beobachtungskanäle erzielt werden, aufgegeben.

Zweitens kann das asymmetrische System wenn die Augen des Anwenders unterschiedliche Eigenschaften haben in eine Situation führen, in der das Auge, das physiologisch besser zur Wahrnehmung hochaufgelöster Bilder geeignet ist, dem Beobachtungskanal mit geringer numerischer Apertur zugeordnet ist, während das Auge das dafür physiologisch schlechter geeignet ist, dem Beobachtungskanal mit hoher numerischer Apertur zugeordnet ist.

Drittens besteht ein nicht vernachlässigbares Risiko, dass bei der Fusion der beiden Bilder im Kopf des Betrachters das deutlich dunklere Bild des Kanals mit der kleinen Apertur unterdrückt wird. Grundsätzlich lässt sich diesem Phänomen mit einem Neutralgraufilter im Beobachtungskanal mit hoher numerischer Apertur entgegenwirken, was aber dann den Vorteil der helleren Abbildung weitestgehend wieder zunichte macht.

Die Aufgabe der Erfindung besteht darin, ein verbessertes optisches Instrument zur Erzeugung von Bildern mit räumlichem Eindruck, insbesondere ein verbessertes Stereomikroskop, bereitzustellen, mit dem auf preisgünstige Weise eine verbesserte Auflösung bei einer gegebenen Schärfentiefe bereitgestellt werden kann.

Diese Aufgabe wird gelöst mit einem optischen Instrument zur Erzeugung von Bildern mit räumlichem Eindruck mit den Merkmalen des Patentanspruchs 1. Vorteilhafte Weiterbildungen der Erfindung sind Gegenstand der abhängigen Ansprüche.

Das erfindungsgemäße optische Instrument zur Erzeugung von Bildern mit räumlichem Eindruck weist einen ersten Beobachtungskanal und einen zweiten gleichzeitig vorhandenen oder im zeitlichen Wechsel mit dem ersten Beobachtungskanal (100) bereitstellbaren Beobachtungskanal auf. Diese Beobachtungskanäle können so aufgebaut werden, wie es aus dem Stand der Technik bekannt ist.

Typischerweise weisen sie im Fall eines Stereomikroskops jeweils ein Okular, ein Tubus-System, das z.B. ein Umlenkprisma und eine oder mehrere weitere Linsen aufweisen kann, ein Vergrößerungssystem, mit dem die Vergrößerung des Stereomikroskops geändert werden kann, das meistens so ausgeführt ist, dass als Zwangsbedingung dieselbe Vergrößerung für beide Beobachtungskanäle eingestellt wird und ein Objektiv, das bei Stereomikroskopen vom Greenough-Typ für jeden Beobachtungskanal einzeln und bei Stereomikroskopen vom Abbe-Typ für beide Beobachtungskanäle gemeinsam vorgesehen ist.

Erfindungswesentlich für das optische Instrument zur Erzeugung von Bildern mit räumlichem Eindruck ist, dass im ersten Beobachtungskanal eine erste Blende mit einer ersten Durchlassöffnung angeordnet ist, wobei die erste Durchlassöffnung eine erste große Halbachse, und eine zur ersten großen Halbachse senkrecht stehende erste kleine Halbachse aufweist, so dass die Ausdehnung der ersten Durchlassöffnung in Richtung der ersten großen Halbachse größer ist als die Ausdehnung der ersten Durchlassöffnung in Richtung der ersten kleinen Halbachse, dass im zweiten Beobachtungskanal eine zweite Blende mit einer zweiten Durchlassöffnung angeordnet ist, wobei die zweite Durchlassöffnung eine zweite große Halbachse, und eine zur zweiten großen Halbachse senkrecht stehende zweite kleine Halbachse aufweist, so dass die Ausdehnung der Durchlassöffnung in Richtung der zweiten großen Halbachse größer ist als die Ausdehnung der Durchlassöffnung in Richtung der zweiten kleinen Halbachse, und dass die erste große Halbachse parallel zu der zweiten kleinen Halbachse verläuft und die zweite große Halbachse parallel zur ersten kleinen Halbachse verläuft.

Bei optischen Instrumenten, in denen die beiden Beobachtungskanäle nicht zeitgleich, sondern sequentiell bereitgestellt werden ist dies dadurch realisierbar, dass bei dem Umschaltprozess zwischen dem ersten und dem zweiten Beobachtungskanal die erste Blende gegen die zweite Blende getauscht wird, was z.B. durch Herausfahren der ersten Blende aus dem Strahlengang und Hineinfahren der zweiten Blende in den Strahlengang geschehen kann oder durch Verwendung einer Blende, deren Durchlassöffnung veränderbar ist und die beim Umschalten auf den Betrieb des optischen Instruments mit dem jeweils anderen Beobachtungskanal angepasst wird, realisiert werden kann.

Es sei an dieser Stelle darauf hingewiesen, dass die Durchlassöffnung nicht notwendigerweise einen scharfen Übergang zu dem den Lichtdurchtritt sperrenden Bereich der Blende aufweisen muss, wie dies bei einer einfachen Lochblende der Fall ist. Sie kann also auch durch ein in die Öffnung einer Blende eingesetztes Verlaufsfilter, beispielsweise ein Apodisationsfilter realisiert werden, sofern dieses eine Durchlassöffnung definiert, die die oben genannten erfindungswesentlichen Eigenschaften aufweist. Eine solche Definition einer Durchlassöffnung kann beispielsweise durch die Menge der Punkte eines Verlaufsfilters, an denen dieses einen Transmissionsgrad oberhalb eines gewissen Schwellenwertes, z.B. >67%, aufweist, gegeben sein.

Ebenfalls unwesentlich ist die Frage, wie und wo die Sperrwirkung des den Lichtdurchtritt sperrenden Bereichs der Blende erzielt wird. Beispielsweise ist es möglich, eine Blende bzw. deren den Lichtdurchtritt sperrenden Bereich durch das Zusammenwirken mehrerer Polarisationsfilter oder durch das Zusammenwirken mehrerer Farbfilter zu realisieren. Dies kann beispielsweise erreicht werden, indem dem durch diesen Bereich hindurchtretenden Licht durch ein erstes Polarisations- bzw. Farbfilter eine durch dieses vorgegebene Polarisation oder Wellenlängenverteilung aufgeprägt wird, die dann im weiteren Verlauf des Strahlengangs durch ein zum ersten Polarisationsfilter senkrecht stehendes zweites Polarisationsfilter bzw. durch ein zweites Farbfilter mit einem Durchlassbereich für Wellenlängen, der mit dem Durchlassbereich für Wellenlängen des ersten Farbfilters nicht überlappt, gesperrt wird.

Der Begriff "große Halbachse", der beispielsweise für Ellipsen wohlbekannt ist, wird dabei in dieser Offenbarung dahingehend verallgemeinert verwendet, dass bei Blenden mit achsensymmetrische Durchgangsöffnungen damit die längste Verbindung von zwei Randpunkten der Durchgangsöffnung gemeint ist, welche auf einer Spiegelachse der Durchgangsöffnung liegt, während bei Blenden, die keine spiegelsymmetrische Durchgangsöffnung aufweisen, damit die längste Verbindung von zwei Randpunkten der Durchgangsöffnung gemeint ist. Offenkundig führt diese Definition für Ellipsen zu demselben Ergebnis wie die Anwendung der üblichen Definition.

Die "kleine Halbachse" im Sinne dieser Offenbarung ist dann durch die längste Verbindung von zwei Randpunkten der Durchlassöffnung einer Blende definiert, die auf der großen Halbachse senkrecht steht. Diese Definition führt im Fall einer ellipsenförmigen Durchlassöffnung auch zu demselben Ergebnis wie die Anwendung der Definition der kleinen Halbachse bei einer Ellipse.

Die erfindungsgemäße Ausgestaltung des optische Instrument zur Erzeugung von Bildern mit räumlichem Eindruck bringt den Effekt mit sich, dass in den beiden Beobachtungskanälen die Schärfentiefe für unterschiedliche Richtungen auf dem Objekt unterschiedlich ist, und zwar normalerweise hoch in der Richtung der kleinen Halbachse der Durchlassöffnung der Blende und gering in Richtung der großen Halbachse der Durchlassöffnung der Blende. Da aber die großen Halbachsen der Durchlassöffnungen der Blenden, die in den beiden Beobachtungskanälen angeordnet sind, senkrecht aufeinander stehen, wird Schärfentiefe in der Richtung, in der sie im ersten Beobachtungskanal nicht bereit gestellt wird, durch den zweiten Beobachtungskanal geliefert. Die beiden Bilder werden dann im Gehirn des Betrachters zu einem Gesamtbild zusammengesetzt, das in der gesamten Beobachtungsebene eine größere Schärfentiefe aufweist.

Beispielsweise führt eine elliptische Blende, deren große Halbachse vertikal zum zu beobachtenden Objekt verläuft, im ersten Beobachtungskanal zu einer verbesserten Schärfentiefe in horizontaler Richtung. Dementsprechend ist die elliptische Blende im zweiten Beobachtungskanal erfindungsgemäß so angeordnet, dass ihre große Halbachse horizontal zum zu beobachtenden Objekt verläuft, so dass sie eine verbesserte Schärfentiefe in vertikaler Richtung bewirkt. Es zeigt sich, dass dann das Gesamtbild, zu dem das Gehirn des Betrachters die Bildinformationen aus beiden Beobachtungskanälen zusammensetzt, im Wesentlichen dem Bild entspricht, das man erhält, wenn man mit horizontal und vertikal hoher Schärfentiefe arbeitet, aber geringere Helligkeitsverluste im Vergleich zu diesem Fall aufweist. Natürlich müssen die erste große Halbachse und die zweite große Halbachse nicht zwingend in vertikaler und horizontaler Richtung in der Bildebene ausgerichtet sein. Tatsächlich scheint es vorteilhaft zu sein, wenn die erste große Halbachse und die zweite große Halbachse in den Beobachtungskanälen so orientiert sind, dass man statt eines Kreuzes, das sich bei der oben exemplarisch diskutierten Horizontal-/ Vertikalausrichtung ergibt, ein Andreaskreuz erhält.

Vorteilhaft ist es, wenn man zusätzlich in mindestens einem der Beobachtungskanäle eine Vorrichtung zur Veränderung der numerischen Apertur des Beobachtungskanals vorsieht, weil dadurch sichergestellt werden kann, dass ein Beobachter die erreichbare Schärfentiefe weiter optimieren kann. Beispielsweise kann man als eine solche Vorrichtung zur Verringerung der numerischen Apertur eine zusätzliche verstellbare Irisblende verwenden.

Besonders vorteilhaft ist es, wenn die erste Durchlassöffnung und die zweite Durchlassöffnung kongruent sind, da so eine hohe Ähnlichkeit der Bildeigenschaften der aus den beiden Beobachtungskanälen gewonnenen Einzelbilder insbesondere im Hinblick auf ihre Bildhelligkeit erreicht werden kann, was deren Verschmelzung im Gehirn erleichtert.

Eine besonders bevorzugte Form für die erste Durchlassöffnung und die zweite Durchlassöffnung ist die einer Ellipse, da diese Formgebung für die meisten Anwendungen die besten Bildeigenschaften mit sich bringt. Es ist aber auch möglich, von der Ellipsenform abzuweichen, was insbesondere einen Gewinn an Helligkeit mit sich bringen kann, aber insbesondere bei Blenden mit zahlreiche Ecken aufweisenden Durchlassöffnungen zu unerwünschten Abbildungen von Spitzlichtern, die außerhalb des Schärfenbereiches liegen, führen können, die in der Praxis insbesondere bei Operationsmikroskopen häufig auftreten. Somit ist eine solche Lösung ein Kompromiss, bei dem zwar die Helligkeit optimiert werden kann, aber nur auf Kosten der Qualität der Abbildung.

Zu einer Optimierung der Helligkeit der erhaltenen Bilder trägt wesentlich bei, wenn die Länge der ersten großen Halbachse und die Länge der zweiten großen Halbachse jeweils dem freien Linsendurchmesser der im parallelen Strahlengang zwischen Objektiv und Tubussystem die Apertur begrenzenden Linse, z.B. der Sammellinse eines Galilei-Vergrößerungswechslers, entsprechen. Als besonders vorteilhaft hat sich dabei in Versuchen ein Verhältnis der ersten großen Halbachse zur ersten kleinen Halbachse und/oder ein Verhältnis der zweiten großen Halbachse zur zweiten kleinen Halbachse von 2:1 erwiesen.

Besonders bewährt haben sich erfindungsgemäße optische Geräte zur Erzeugung von Bildern mit räumlichem Eindruck in Form von Stereomikroskopen. Daher ist es besonders bevorzugt, dass das optische Gerät ein Stereomikroskop mit einem ersten Beobachtungskanal für das eine Auge eines Benutzers und einem zweiten Beobachtungskanal für das zweite Auge des Benutzers ist.

Eine Möglichkeit dazu, das Stereomikroskop mit einer variablen Vergrößerung zu versehen ist, dass das Stereomikroskop im ersten Beobachtungskanal als Vergrößerungswechsler ein erstes pankratisches Zoomobjektiv zur Variation der Vergrößerung des Stereomikroskops durch Änderung der Position von im pankratischen Zoomobjektiv vorhandenen optischen Elementen aufweist und im zweiten Beobachtungskanal ein zweites pankratisches Zoomobjektiv zur Variation der Vergrößerung des Stereomikroskops durch Änderung der Position von im pankratischen Zoomobjektiv vorhandenen optischen Elementen aufweist. Dabei können die beiden pankratischen Zoomobjektive insbesondere so ausgeführt sein, dass an beiden immer dieselbe Vergrößerung eingestellt ist. Der Vorteil dieser Art der Vergrößerungsvariation ist, dass damit eine stufenlose Variation der Vergrößerung möglich ist.

Eine vorteilhafte Weiterbildung der soeben beschriebenen Ausführungsform besteht darin, dass im ersten Beobachtungskanal und im zweiten Beobachtungskanal jeweils eine weitere Blende vorhanden ist, wobei deren Durchlassöffnung jeweils kongruent zu der Durchlassöffnung der ersten Blende und/oder kongruent zu der Durchlassöffnung der zweiten Blende ist, wobei die weiteren Blenden jeweils um eine senkrecht auf ihrer Durchlassöffnung stehende, im Mittelpunkt der Blende angeordnete Mittelsenkrechte drehbar gelagert sind, so dass der Winkel zwischen der großen Halbachse der Durchlassöffnung der ersten Blende und der großen Halbachse der Durchlassöffnung der im ersten Beobachtungskanal angeordneten weiteren Blende und der Winkel zwischen der großen Halbachse der Durchlassöffnung der zweiten Blende und der großen Halbachse der Durchlassöffnung der im zweiten Beobachtungskanal angeordneten weiteren Blende in Abhängigkeit von der eingestellten Vergrößerung veränderbar sind.

Diese Veränderbarkeit sollte dabei so ausgestaltet sein, dass bei maximaler Vergrößerung die große Halbachse der Durchlassöffnung der im ersten Beobachtungskanal angeordneten weiteren Blende parallel zur großen Halbachse der Durchlassöffnung der ersten Blende verläuft und die große Halbachse der Durchlassöffnung der im zweiten Beobachtungskanal angeordneten weiteren Blende parallel zur großen Halbachse der Durchlassöffnung der zweiten Blende verläuft, während bei minimaler Vergrößerung die große Halbachse der Durchlassöffnung der im ersten Beobachtungskanal angeordneten weiteren Blende senkrecht zur großen Halbachse der Durchlassöffnung der ersten Blende verläuft und die große Halbachse der Durchlassöffnung der im zweiten Beobachtungskanal angeordneten weiteren Blende senkrecht zur großen Halbachse der Durchlassöffnung der zweiten Blende verläuft und zwischen diesen beiden Werten der Winkel zwischen den entsprechenden großen Halbachsen zwischen 0° bei maximaler Vergrößerung und 90° bei minimaler Vergrößerung variiert.

Praktisch realisierbar ist eine solche Bewegung in Abhängigkeit von der gewählten Vergrößerung eines pankratischen Zoomobjektives beispielsweise durch eine mechanische Ansteuerung über Wellen und/oder Getriebe oder durch eine elektronische Ansteuerung, bei der die einer gegebenen Vergrößerung zugeordnete Position der weiteren Blende oder auch beider Blenden mittels eines Motors angesteuert wird.

Alternativ dazu kann eine nicht-kontinuierliche, diskrete Variation der Vergrößerung dadurch erreicht werden, dass das Stereomikroskop einen Vergrößerungswechsler aufweist, der als drehbare Trommel mit paarig und zur Nutzung auf Umschlag angeordneten Galileifernrohren mit einer Sammellinse und einer Zerstreuungslinse ausgeführt ist, so dass durch Drehung der Trommel jeweils ein anderes Paar von Galileifernrohren in den ersten und zweiten Beobachtungskanal hineingedreht werden kann. Da die mindestens eine Streulinse und mindestens eine Sammellinse der Galileifernrohre zur Nutzung auf Umschlag auf der Trommel angeordnet sind, erhöhen sie die Vergrößerung, wenn die Sammellinse dem Objektiv zugewandt sind und verkleinern das Bild, wenn sie gegenüber dieser Position um 180° gedreht sind, also umgeschlagen betrieben werden.

Bei dieser Art von Vergrößerungswechsler ist es vorteilhaft, wenn auf den Sammellinsen der paarig angeordneten Galileifernrohre weitere Blenden, deren Durchlassöffnung jeweils kongruent zu der Durchlassöffnung der ersten Blende und/oder kongruent zu der Durchlassöffnung der zweiten Blende ist, angeordnet sind.

Eine bevorzugte Variante der Anordnung der weiteren Blenden sieht vor, dass in der Position der Trommel, in der das jeweils in den Strahlengang des Stereomikroskops eingebrachte eingestellte Paar von Galileifernrohren vergrößert (also der Position, in der dessen Sammellinse dem Objektiv des Stereomikroskops zugewandt ist), die große Halbachse der Durchlassöffnung der im ersten Beobachtungskanal angeordneten weiteren Blende parallel zur großen Halbachse der Durchlassöffnung der ersten Blende verläuft und die große Halbachse der Durchlassöffnung der im zweiten Beobachtungskanal angeordneten weiteren Blende parallel zur großen Halbachse der Durchlassöffnung der zweiten Blende verläuft.

Dies bringt mit sich, dass in der Position, in der die maximale Vergrößerung eingestellt ist, auch die effektive numerische Apertur des Systems am größten ist, so dass die mit dieser Vergrößerung erzielbare Auflösung so groß wie möglich ist.

Im Gegensatz dazu befindet sich in der Position, in der das Galileifernrohr verkleinert, d.h. in einer Position, in der die Trommel im Vergleich zur vergrößernden Position des in den jeweiligen Beobachtungskanal um 180° gedreht ist, die große Halbachse der Durchlassöffnung der weiteren Blende in einem Winkel von 90° zur großen Halbachse der ersten bzw. zweiten Durchlassöffnung, was dazu führt, dass die Apertur minimiert wird und somit die Schärfentiefe für kleine Vergrößerungen maximiert wird.

Die Erfindung wird nachfolgend mittels Figuren, die als Stereomikroskope ausgeführte Ausführungsbeispiele der Erfindung darstellen, näher erläutert. Es zeigt:
- Fig.1a:: den schematischen Aufbau eines ersten Ausführungsbeispiels der Erfindung,
- Fig.1b:: den schematischen Aufbau eines zweiten Ausführungsbeispiels der Erfindung,
- Fig. 1c:: den schematischen Aufbau eines dritten Ausführungsbeispiels der Erfindung,
- Fig.2:: ein erstes Beispiel für die Ausgestaltung der Durchlassöffnung einer Blende,
- Fig.3:: ein zweites Beispiel für die Ausgestaltung der Durchlassöffnung einer Blende,
- Fig.4:: ein drittes Beispiel für die Ausgestaltung der Durchlassöffnung einer Blende,
- Fig.5:: eine erste Anordnung von zwei elliptischen Blenden mit zueinander senkrecht verlaufenden großen Halbachsen, betrachtet in Propagationsrichtung des Lichtes,
- Fig.6:: eine zweite Anordnung von zwei elliptischen Blenden mit zueinander senkrecht verlaufenden großen Halbachsen, betrachtet in Propagationsrichtung des Lichtes,
- Fig.7:: einen als Trommel mit paarig und zur Nutzung auf Umschlag angeordneten Galileifernrohren ausgeführten Vergrößerungswechsler mit Blenden, betrachtet von außen,
- Fig.8:: eine Schnittzeichnung durch den Vergrößerungswechsler der Figur 7, die einen Blick auf seinen inneren Aufbau erlaubt,
- Fig.9:: die aus der in Figur 7 gezeigten Anordnung resultierende Position der Blenden in den Beobachtungskanälen eines Stereomikroskops,
- Fig.10a:: eine erste aus einer mittleren Vergrößerungsstufe eines pankratischen Zoomobjektivs resultierende Position der Blenden in den Beobachtungskanälen eines Stereomikroskops, und
- Fig.10b:: eine zweite aus einer höheren Vergrößerungsstufe eines pankratischen Zoomobjektivs als der Vergrößerungsstufe in Figur 10a resultierende Position der Blenden in den Beobachtungskanälen eines Stereomikroskops.

In den Figuren werden für gleich aufgebaute Bauteile bzw. gleiche Baugruppen jeweils dieselben Bezugszeichen verwendet, soweit nichts anderes erwähnt wird.

Soweit in den Figuren Strahlengänge skizziert sind, dienen sie nur einer Veranschaulichung des Sachverhalts und entsprechen nicht notwendigerweise dem realen Strahlengang, sondern sind ggf. davon abweichend dargestellt, um das Prinzip klar aber ohne Überfrachtung oder übermäßige Komplikation zu illustrieren.

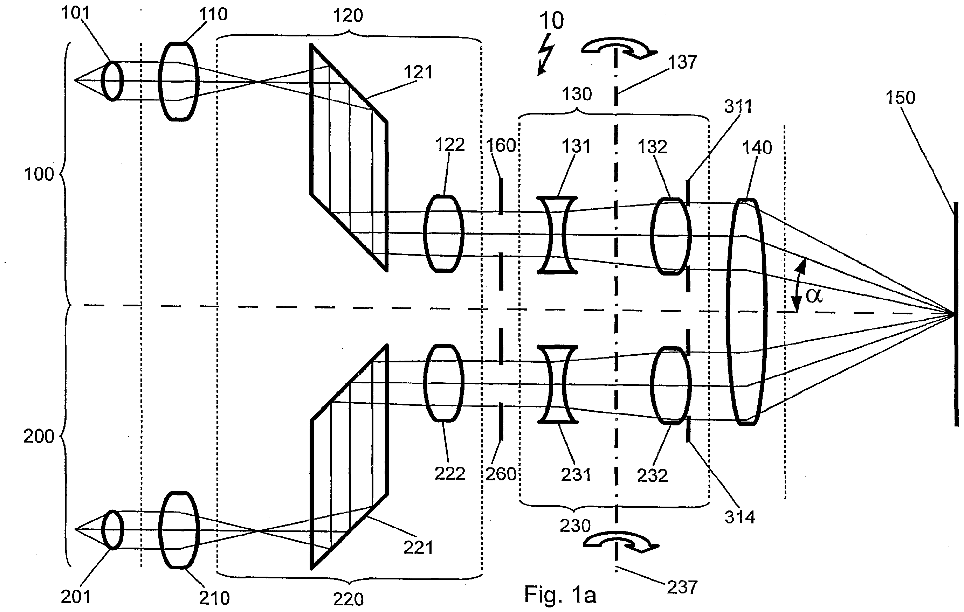

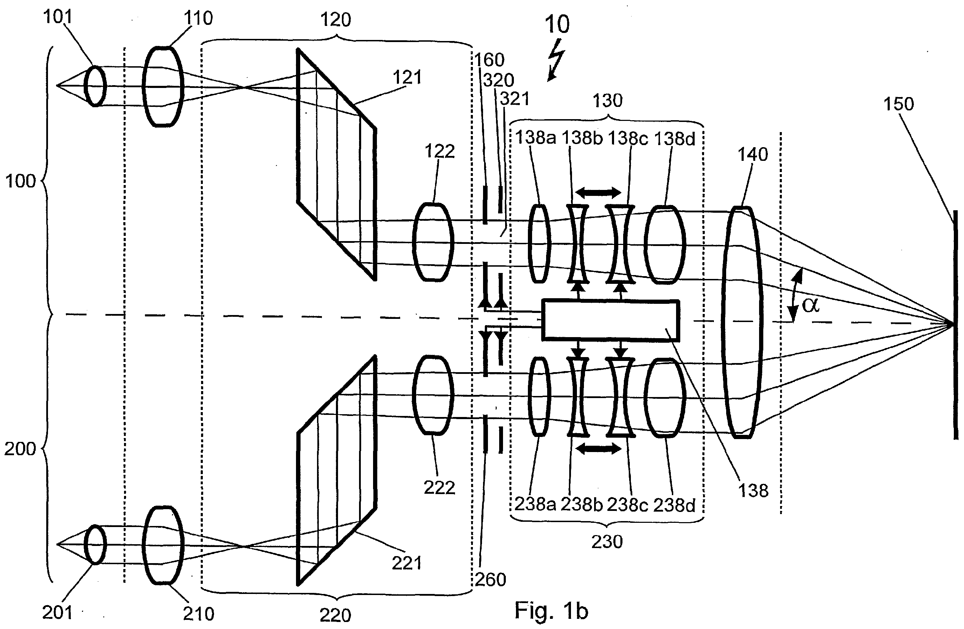

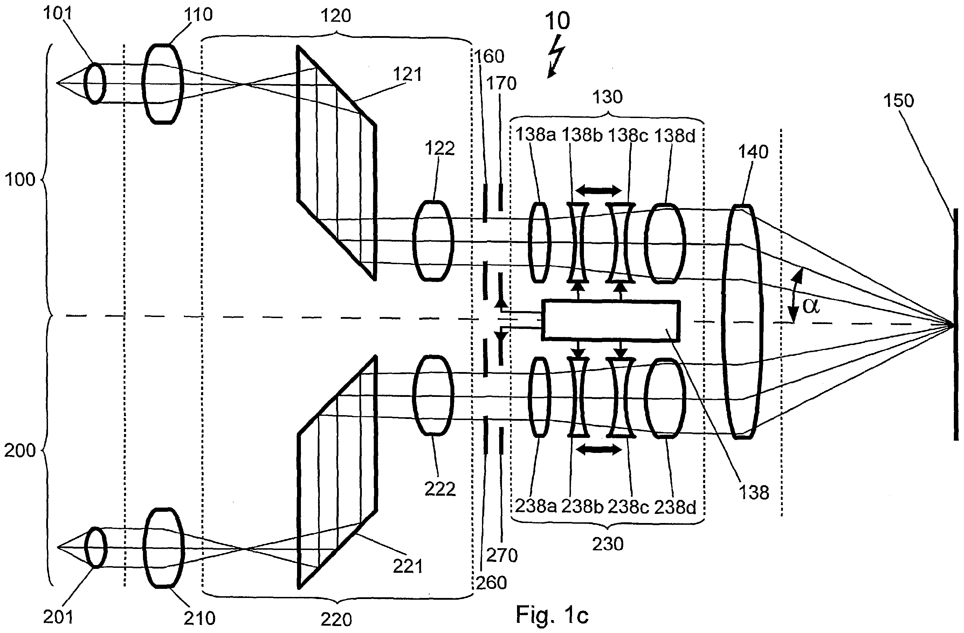

Figur 1a zeigt schematisch den Aufbau eines Ausführungsbeispiels der Erfindung am Beispiel eines Stereomikroskops 10 vom Abbe-Typ und den Strahlengang durch dieses. Dabei sind die optischen Bauelemente lediglich schematisch als Linsen dargestellt, können aber auch komplexere, ggf. auch räumlich voneinander getrennte optische Baugruppen sein. Der Vollständigkeit der Darstellung des Strahlengangs halber sind in der Figur 1 auch die Augen 101,201 des Betrachters als optisches Element dargestellt, die natürlich nicht einen Bestandteil des Mikroskops darstellen.

Das Stereomikroskop 10 weist einen ersten Beobachtungskanal 100 und einen zweiten Beobachtungskanal 200 auf. Im ersten Beobachtungskanal 100 sind ein Okular 110, ein exemplarisches Tubussystem 120 mit einem Prisma 121 und einer Tubuslinse 122, und ein Vergrößerungswechsler 130 angeordnet.

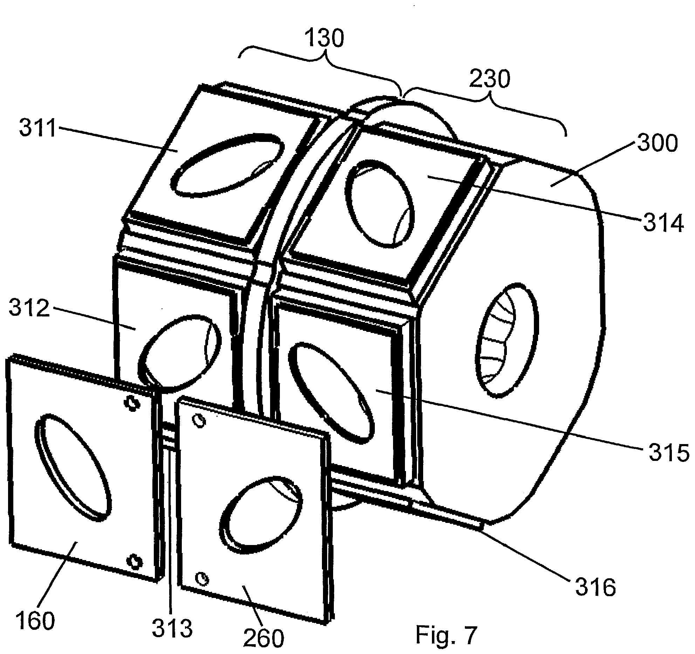

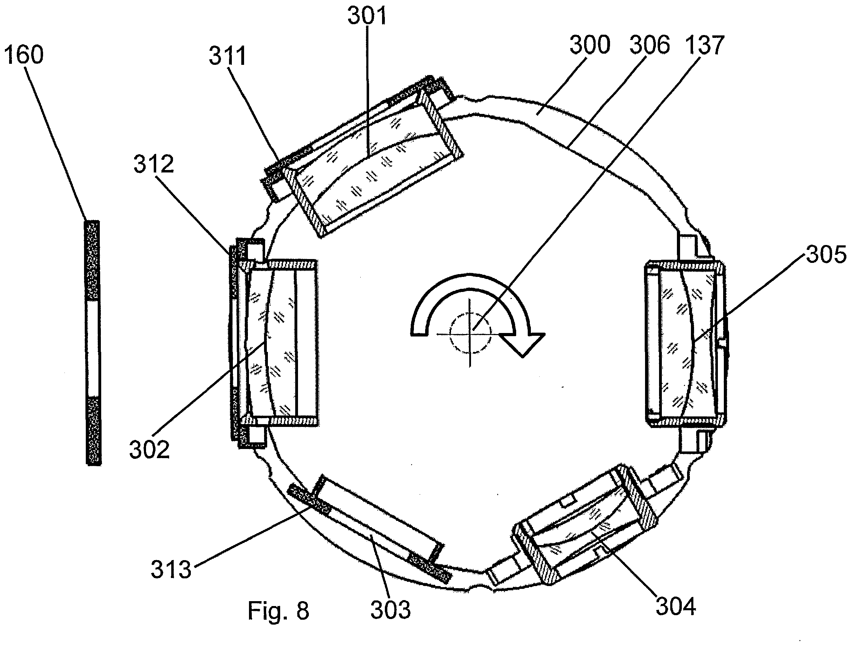

In der Darstellung der Figur 1a ist der Vergrößerungswechsler 130 exemplarisch als Trommel mit auf Umschlag betreibbaren Galilei-Fernrohren, die ja bekanntlich prinzipgemäß eine Anordnung aus einer "-"-Linse und einer "+"-Linse sind, ausgeführt dargestellt Schematisch ist dies dargestellt durch zwei Linsen 131,132, von denen eine streut, also eine "-" -Linse ist und die andere sammelt, also eine "+"-Linse ist, die im Strahlengang des ersten Beobachtungskanals 100 angeordnet sind, und durch Drehung um die Drehachse 137 aus dem Strahlengang herausdrehbar sind, wobei dann ein anderes, in Figur 1a nicht erkennbares Galileifernrohr in den Strahlengang hineingedreht wird. Weitere Details zum Aufbau eines als Trommel ausgeführten Vergrößerungswechslers 130 werden weiter unten anhand der Figuren 7 und 8 beschrieben.

Der zweite Beobachtungskanal 200 ist analog aufgebaut und weist ein Okular 210, ein exemplarisches Tubussystem 220 mit einem Prisma 221 und einer Tubuslinse 222, und einen als Trommel ausgeführten Vergrößerungswechsler 230, wie beim ersten Beobachtungskanal schematisch dargestellt durch zwei Linsen 231,232 eines der in der Trommel angeordneten Galileifernrohre und die Drehachse 237, auf. Licht von Punkten aus der Objektebene 150 wird unter einem Stereowinkel α durch das gemeinsame Objektiv 140 in den ersten Beobachtungskanal 100 und in den zweiten Beobachtungskanal 200 eingeleitet und erzeugt zwei leicht unterschiedliche Bilder im Auge 101,102 des Betrachters, die von dessen Gehirn zu einem Bild mit dreidimensionalem Eindruck verarbeitet werden.

Der bis hierher beschriebene schematische Aufbau entspricht einem üblichen Aufbau eines Stereomikroskops vom Abbe-Typ, wie er aus dem Stand der Technik bekannt ist und in einer Vielzahl konkreter Ausführungen von Stereomikroskopen, beispielsweise der Firmen Zeiss, Leica, Atmos und anderen Herstellern auf dem Markt präsent ist. Der nicht dargestellte Aufbau nach Greenough unterscheidet sich lediglich dadurch, dass dort statt des gemeinsamen Objektivs 140 jedem der beiden Beobachtungs-kanäle 100,200 ein Objektiv zugeordnet ist und die Achsen der optischen Systeme so zueinander geneigt sind, dass beide Augen das gleiche Objekt in der Schärfeebene sehen.

Das erfindungsgemäße Stereomikroskop 10 weist zusätzlich zu diesen üblichen Bauteilen im ersten Beobachtungskanal 100 eine erste Blende 160 und im zweiten Beobachtungskanal 200 eine zweite Blende 260 auf, die exemplarisch zwischen Tubussystem 120 bzw. 220 und Vergrößerungswechsler 130 bzw. 230 angeordnet ist, aber auch an anderer Stelle im parallelen Strahlengang zwischen Objektiv und Tubuslinse platziert werden kann.

Dabei sind die in Figur 1a nicht sichtbaren Durchlassöffnungen der Blenden 160/260 so ausgestaltet, dass die erste/zweite Durchgangsöffnung der ersten/zweiten Blende 160/260 eine erste/zweite große Halbachse, und eine zur ersten/zweiten großen Halbachse senkrecht stehende erste/zweite kleine Halbachse aufweisen, so dass die Ausdehnung der ersten/zweiten Durchlassöffnung in Richtung der ersten/zweiten großen Halbachse größer ist als die Ausdehnung der ersten/zweiten Durchlassöffnung in Richtung der ersten/zweiten kleinen Halbachse. Auf diese Weise wird eine anisotrope Apertur geschaffen, die zu einer richtungsabhängigen Schärfentiefe führt.

Ferner erfüllt die Orientierung der Blenden 160, 260 relativ zueinander die Bedingung, dass die erste große Halbachse, d.h. parallel zu der zweiten kleinen Halbachse verläuft und die zweite große Halbachse parallel zur ersten kleinen Halbachse verläuft. Auf diese Weise wird sichergestellt, dass in den beiden Beobachtungskanälen 100,200 die verbesserte Schärfentiefe in Richtung der jeweiligen großen Halbachse in zueinander senkrechten Richtungen bereitgestellt wird, so dass das Gehirn diese Informationen der Augen 101,201 zu einem Gesamtbild mit hoher Schärfentiefe in der gesamten Bildebene zusammensetzen kann.

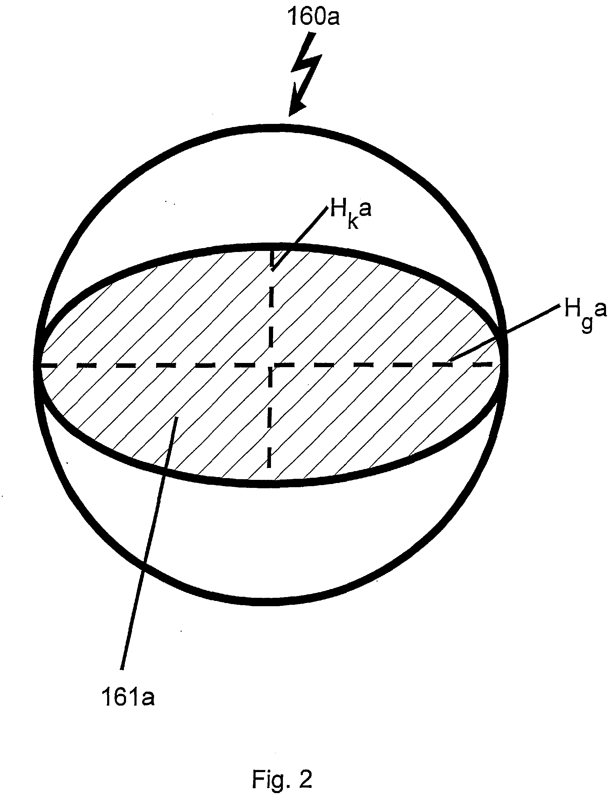

Beispiele für Blenden, deren Durchlassöffnung die Bedingungen für die Blenden 160 bzw. 260 erfüllen und somit als Blende 160 bzw. 260 eingesetzt werden können, zeigen die Figuren 2 bis 4.

Ein weiteres, optionales Bauteil, das im Zusammenhang mit Ausführungsbeispielen der Erfindung mit als Trommel ausgeführtem Vergrößerungswechsler vorteilhafte Wirkungen entfalten kann, sind die in Figur 1a dargestellten weiteren Blenden 311,314, die weiter unten bei der Diskussion der Figuren 7 und 8 noch genauer diskutiert werden.

Das Ausführungsbeispiel eines Stereomikroskops 10 gemäß Figur 1b unterscheidet sich von dem Ausführungsbeispiel gemäß Figur 1a lediglich im Hinblick auf die konkrete Ausgestaltung des Vergrößerungswechslers 130, der in Figur 1b als -ebenfalls nur schematisch dargestelltes- paariges pankratisches Zoom ausgeführt ist, bei dem eine Ansteuerung 138 mechanisch oder durch elektronische Ansteuerung einer oder mehrerer nicht dargestellter Antriebsvorrichtungen die Position von Linsen 138b,138c bzw. Linsen 238b,238c zwischen Linsen 138a, 138d bzw. Linsen 238a,238d im ersten bzw. zweiten Beobachtungskanal 100,200 auf der optischen Achse verschiebt und dadurch die Vergrößerung ändert. Selbstverständlich kann die Art und Anzahl der Linsen variabel sein, insbesondere können auch mehr Linsen verschiebbar ausgeführt sein.

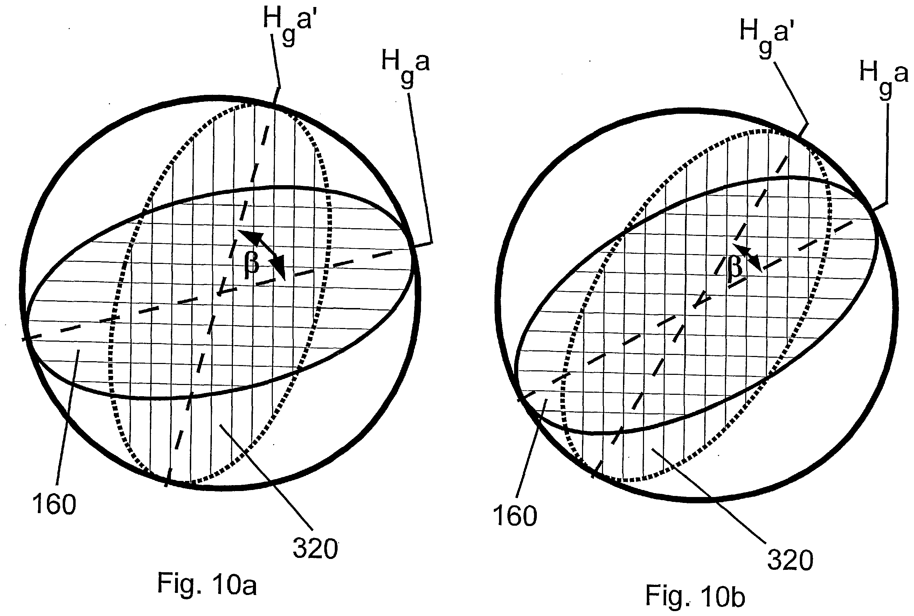

Auch bei dem Ausführungsbeispiel mit pankratischem Zoom gemäß Figur 1b kann eine weitere Blende 320 in den Beobachtungskanälen 100,200 angeordnet werden, wobei deren Orientierung und/oder die Orientierung der Blenden 160,260 im jeweiligen Beobachtungskanal 100,200, d.h. die Richtung, in die die Hauptachsen Durchgangsöffnungen der Blenden zeigen, ebenfalls durch die Ansteuerung 138 beeinflusst werden kann. Der Effekt dieser Maßnahme wird weiter unten anhand der Figuren 10a und 10b näher erläutert.

Das Ausführungsbeispiel eines Stereomikroskops 10 gemäß Figur 1c zeigt, wie das Ausführungsbeispiel gemäß Figur 1b, ein System, bei dem der Vergrößerungswechsler 130 als -wieder nur schematisch dargestelltes- paariges pankratisches Zoom ausgeführt ist, bei dem eine Ansteuerung 138 mechanisch oder durch elektronische Ansteuerung einer oder mehrerer nicht dargestellter Antriebsvorrichtungen die Position von Linsen 138b,138c bzw. Linsen 238b,238c zwischen Linsen 138a, 138d bzw. Linsen 238a,238d im ersten bzw. zweiten Beobachtungskanal 100,200 auf der optischen Achse verschiebt und dadurch die Vergrößerung ändert. Selbstverständlich kann die Art und Anzahl der Linsen variabel sein, insbesondere können auch mehr Linsen verschiebbar ausgeführt sein.

Der Unterschied zwischen der Ausführungsform der Figur 1b und 1c besteht darin, wie die numerische Apertur der Beobachtungskanäle beeinflusst werden kann. Während in der Ausführungsform der Figur 1b die Apertur durch Rotation von zwei Blenden relativ zueinander variiert wird, sind in Figur 1c verstellbare Irisblenden 170,270 in dem ersten bzw. zweiten Beobachtungskanal 100,200 angeordnet. Im dargestellten Beispiel werden diese von der Ansteuerung 138 mit kontrolliert, so dass die Pupillengröße der verstellbaren Irisblenden 170,270 an die jeweils mit dem pankratischen Zoom eingestellte Vergrößerung angepasst ist. Die verstellbaren Irisblenden 170,270 können aber auch vom Benutzer individuell verstellbar ausgeführt werden.

Es wird explizit darauf hingewiesen, dass das Vorsehen von Irisblenden 170,270 als zusätzliches optisches Bauelement im ersten bzw. zweiten Beobachtungskanal 100,200 auch bei den Ausführungsformen der Figuren 1a und 1b möglich ist.

In Figur 2 ist eine Blende 160a mit elliptischer Durchlassöffnung 161a mit großer Halbachse H_{g}a und kleiner Halbachse Hₖa dargestellt, wobei sich die jeweils als gestrichelte Linie dargestellten Halbachsen H_{g}a, Hₖa hier unmittelbar aus der üblichen Definition der Halbachsen einer Ellipse ergeben. Das Verhältnis H_{g}a:Hₖa ist in diesem Beispiel 2:1. In Figur 2 ist durch den Kreisring der freie Linsendurchmesser d der aperturbegrenzenden Linse, was in der Regel die Sammellinse des Vergrößerungswechslers ist, angegeben. Man erkennt also, dass die Länge der großen Halbachse H_{g}a hier dem freien Linsendurchmesser d entspricht.

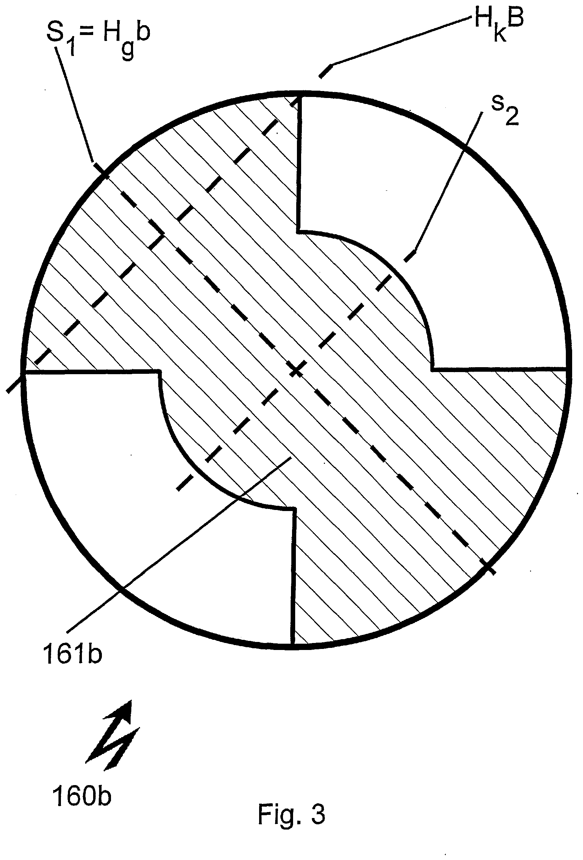

Die in Figur 3 dargestellte Blende 160b hat eine Durchlassöffnung 161b, deren Form einem zentralen Kreis mit zwei einander gegenüberliegenden Kreisringsektoren mit gleichem Winkelbereich entspricht. Die Form hat zwei Spiegelachsen s1 und s2, wobei die Spiegelachse s1 länger ist als die Spiegelachse s2 und somit mit der großen Halbachse H_{g}b zusammenfällt. Die kleine Halbachse Hₖb entspricht dann den längsten, senkrecht dazu verlaufenden Geraden. Diese Form der Durchlassöffnung maximiert die erreichbare Helligkeit der Abbildung, wegen ihrer scharfen Zacken kann sie allerdings eine als unschön empfundene Abbildung von Spitzlichtern, die sich außerhalb des Schärfebereichs befinden, mit sich bringen. Dies ist insbesondere bei OP-Mikroskopen ein störender Effekt, der aber hingenommen werden kann und muss, wenn sonst nicht genug Helligkeit erreicht werden kann.

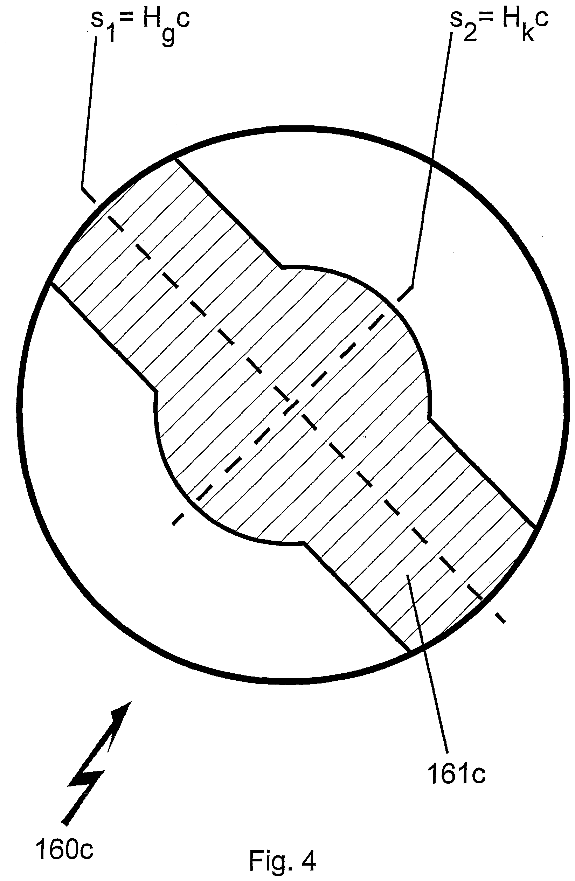

Die in Figur 4 dargestellte Blende 160c hat eine Durchlassöffnung 161c, deren Form einem zentralen Kreis mit zwei einander gegenüberliegenden Ausschnitten eines Kreisrings mit zueinander parallelen, also im Gegensatz zum Ausführungsbeispiel der Figur 3, nicht radial verlaufenden, Schnittlinien. Die Form hat zwei Spiegelachsen s1 und s2, wobei die Spiegelachse s1 länger ist als die Spiegelachse s2 und somit mit der großen Halbachse H_{g}c zusammenfällt. Die kleine Halbachse Hₖc entspricht dann den längsten, senkrecht dazu verlaufenden Geraden und fällt mit der Spiegelachse s2 zusammen. Auch die Blende 160c kann eine gegenüber der Helligkeit der Blende 160a verbesserte Helligkeit, wenngleich nicht die Helligkeit der Blende 160b erreichen und verringert die "Zackigkeit" und somit das Auftreten von unschönen Abbildungen von Spitzlichtern im Verhältnis zur Blende 160b spürbar.

Auf weitere Wirkungen, die diese Variation der Form der Durchlassöffnungen 161a-c mit sich bringt, wird weiter unten im Zusammenhang mit der Diskussion der Figur 7 genauer eingegangen.

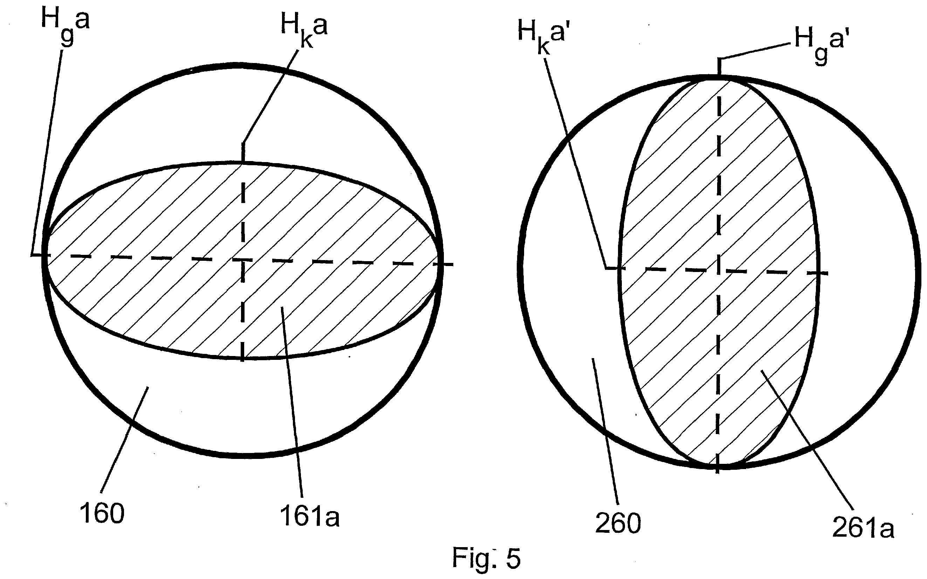

Figur 5 zeigt exemplarisch, wie eine erste Blende 160 und eine zweite Blende 260, im Lichtweg des Stereomikroskops angeordnet sind, und zwar betrachtet von der Seite des Anwenders bzw. des Tubussystems. Die Blenden 160, 260 sind jeweils so ausgestaltet, wie es anhand der Figur 2 beschrieben wurde, weisen also jeweils elliptische Durchlassöffnungen 161a, 261a mit großen Halbachsen H_{g}a, H_{g}a' und dazu senkrecht verlaufenden kleinen Halbachsen Hₖa, Hₖa' auf und sind insbesondere kongruent. Dabei verläuft die erste große Halbachse, also die Halbachse H_{g}a der Durchlassöffnung 161a, parallel zu der zweiten kleinen Halbachse, also der Halbachse Hₖa' der zweiten Durchlassöffnung 261a und die zweite große Halbachse, also die Halbachse H_{g}a' der Durchlassöffnung 261a, parallel zu der ersten kleinen Halbachse, also der Halbachse Hₖa der ersten Durchlassöffnung 161a.

Auf diese Weise wird sichergestellt, dass in den beiden Beobachtungskanälen 100,200 die verbesserte Schärfentiefe in Richtung der kleinen Halbachse in zueinander senkrechten Richtungen bereitgestellt wird, so dass das Gehirn diese Informationen der Augen 101,201 zu einem Gesamtbild mit hoher Schärfentiefe in der gesamten Bildebene zusammensetzen kann.

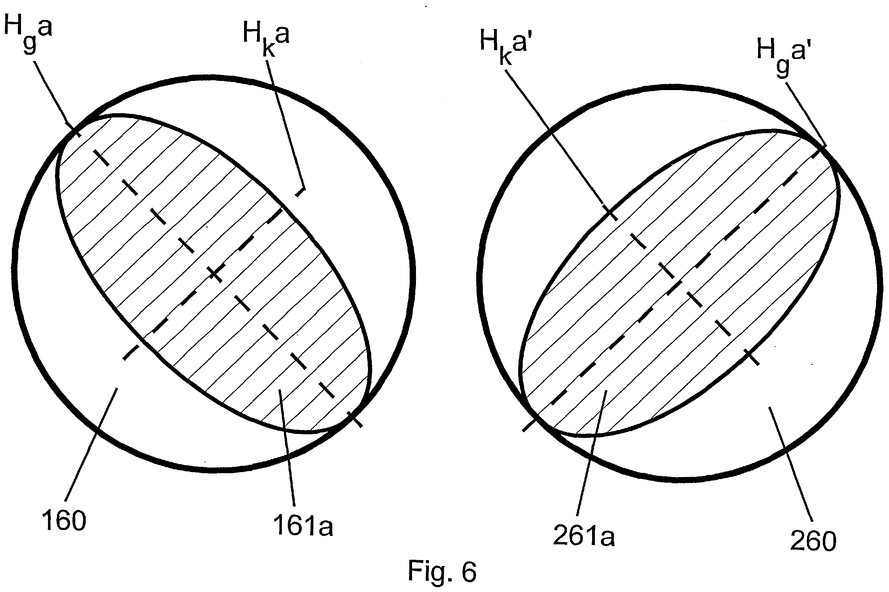

Figur 6 unterscheidet sich von Figur 5 nur hinsichtlich der Orientierung der Blenden 160,260. Während in Figur 5 die Ausrichtung der Blenden 160,260 die Halbachsen in der horizontalen und vertikalen Richtung verlaufen lässt, bilden die Durchgangsöffnungen 161,261 der Blenden 160,260 in Figur 6 die Schenkel eines V. Der Effekt, der mit dieser bevorzugten Anordnung erzielt werden kann, ergibt sich insbesondere bei der Betrachtung der Figuren 7 bis 9.

Die Figuren 7 und 8 zeigen den Aufbau eines Vergrößerungswechslers, der als drehbare Trommel 300 mit paarig angeordneten, auf Umschlag betreibbaren Galilei-Fernrohren ausgeführt ist, also einen möglichen Aufbau eines Vergrößerungswechslers 130, in der in Figur 1a skizzenhaft dargestellten Ausgestaltung.

Dabei zeigt Figur 7 die Außenansicht des Vergrößerungswechslers in Gestalt einer drehbaren Trommel 300, deren linke Hälfte den Vergrößerungswechsler 130 und deren rechte Hälfte den Vergrößerungswechsler 230 in Figur 1a repräsentiert.

Wie besonders gut in der Schnittdarstellung der senkrecht zur Drehachse der Trommel liegenden Ebene, in der die Galilei-Fernrohre eines der Paare liegen, gemäß Figur 8 zu erkennen ist, enthält die Hälfte der Trommel 300, in der die Schnittebene liegt und die den Vergrößerungswechsler 130 des ersten Beobachtungskanals 100 bildet, zwei Sammellinsen 301,302 und zwei Streulinsen 304,305 welche so im Rand der Trommel 300, der die Form eines Zylindermantels mit Durchbrechungen für die jeweiligen Linsen aufweist, angeordnet sind, dass jeweils eine Sammellinse 301,302 und eine dieser gegenüber liegende Streulinse 304,305 gemeinsam in den Strahlengang des Stereomikroskops 10 einbringbar sind. Die Sammellinse 301 und die Streulinse 304und die Sammellinse 302 und die Streulinse 305 bilden somit jeweils ein Galilei-Fernrohr, wobei durch die Eigenschaften der Linsenpaare die Vergrößerung des jeweiligen Galilei-Fernrohrs bestimmt wird.

Ein drittes Galilei-Fernrohr mit Vergrößerung 1 ist dadurch realisiert, dass zwei einander gegenüber liegende Öffnungen 303, 306 in der Trommel 300 vorgesehen sind.

Zudem erkennt man, dass diese Galilei-Fernrohre auf Umschlag betreibbar sind, was bedeutet, dass sie jeweils in zwei Orientierungen betreibbar sind, nämlich mit der jeweiligen Sammellinse 301,302 benachbart zum in Figur 7 und 8 nicht dargestellten Objektiv 140, was zu einer Erhöhung der Gesamtvergrö-ßerung des Stereomikroskops 10 führt, und mit der jeweiligen Streulinse 304,305 benachbart zum in Figur 7 und 8 nicht dargestellten Objektiv, was zu einer Verringerung der Gesamtvergrößerung des Stereomikroskops 10 führt. Auch das durch die Öffnungen 303,306 gebildete Galilei-Fernrohr ist auf Umschlag betreibbar, hat aber immer die Vergrößerung 1. Insgesamt handelt es sich hier also um einen fünffach-Vergrößerungswechsler, mit dem fünf Vergrößerungen eingestellt werden können.

Wie man in Figur 8 besonders gut sieht, ist dabei auf den Sammellinsen 301,302 bzw. der Öffnung 303 jeweils eine weitere Blende 311,312,313 angebracht, welche jeweils eine zu der Durchlassöffnung der in Figur 7 sichtbaren ersten Blende 160 und zweiten Blende 260 kongruente Durchlassöffnung aufweist, die jeweils als Ellipse ausgeführt ist und jeweils eine große Halbachse H_{g}a und eine kleine Halbachse Hₖa aufweist.

Die in Figur 8 nicht erkennbare zweite Hälfte der Trommel 300, die den Vergrößerungswechsler 230 des zweiten Beobachtungskanals bildet, ist bis auf die Orientierung der dort vorgesehenen weiteren Blenden 314,315,316, die in Figur 7 dargestellt sind, identisch aufgebaut.

In der Darstellung der Figur 7 sind die von den weiteren Blenden 311,312,313,314,315,316 bedeckten Sammellinsen bzw. Öffnungen der Galilei-Fernrohre der ersten Blende 160 bzw. der zweiten Blende 260 zugewandt und somit die zugehörigen Streulinsen dem dort nicht dargestellten Objektiv 140. Das betriebene Galilei-Fernrohr ist also in der die Vergrößerung des Stereomikroskops 10 verringernden Position. Die Orientierung der weiteren Blenden 311 bis 316 ist so gewählt, dass die Durchlassöffnungen in der dargestellten, verkleinernden Position der Galilei-Fernrohre jeweils um 90° relativ zur Durchlassöffnung der in dem entsprechenden Beobachtungskanal zugehörigen Blende 160 bzw. 260 verdreht sind und somit die jeweiligen Halbachsen H_{g}a, Hₖa der Durchlassöffnungen der ersten/zweiten Blende und der weiteren Blenden auf der Trommel 300 senkrecht zueinander stehen.

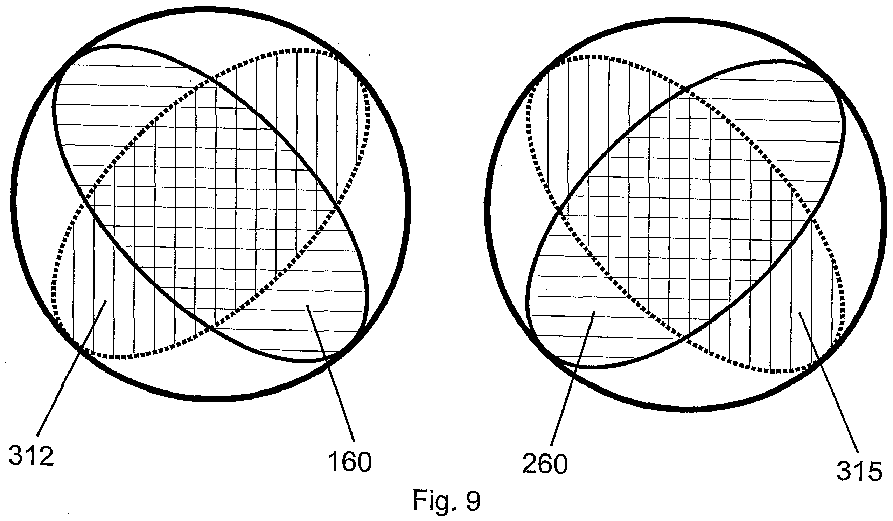

Der Effekt dieser Maßnahme ist in Figur 9 illustriert, in der die Blenden 160 und 312 sowie 260 und 315 einander überlagert dargestellt sind: Bei niedriger Vergrößerung ist die Apertur des Stereomikroskops 10 durch den in Figur 9 kreuzweise schraffierten Bereich gegeben und somit kleiner als die Durchlassöffnung der Blende 160. Dies ist vorteilhaft, weil nur bei einer hinreichend kleinen Apertur die eingestellte Vergrößerung auch zu einer entsprechenden Verbesserung der Schärfentiefe des Mikroskops führt. Wegen der ohnehin geringen Vergrößerung hat die kleinere Apertur keine negativen Auswirkungen auf die erreichte noch sichtbare Auflösung.

Wie man sich anhand der Figur 7 leicht vergegenwärtigt, führt eine Drehung der Trommel 300 um 180°, die das Galilei-Fernrohr in eine Position bringt, in der es die Gesamtvergrößerung des Stereomikroskops 10 erhöht, dazu, dass die im Strahlengang befindlichen Blenden der weiteren Blenden 311 bis 316 nun so orientiert sind, dass ihre Durchlassöffnungen genauso orientiert sind wie die Durchlassöffnungen der ersten Blende 160 bzw. der zweiten Blende 260. Wirksam ist dann also jeweils die gesamte Ellipse, was, wie erwähnt, vorteilhaft für die Auflösung in Richtung der großen Halbachse ist.
Somit führt diese Anordnung dazu, dass der Benutzer des Stereomikroskops 10 automatisch mit der Wahl der Vergrößerung durch Einstellung des Vergrößerungswechslers 130,230 die Apertur im ersten Beobachtungskanal 100 und im zweiten Beobachtungskanal 200 anpasst.

Wählt man statt der in Figur 2 dargestellten Blenden mit elliptischer Durchlassöffnung die in Figur 3 oder Figur 4 dargestellten Blenden, ergibt sich derselbe Effekt mit dem Unterschied, dass bei der verkleinernden Einstellung des Galilei-Fernrohrs im Vergrößerungswechsler die effektive Apertur kreisförmig ist, was die Bildeigenschaften in diesem Fall positiv beeinflusst, aber mit schlechteren Bildeigenschaften bei der vergrößernden Einstellung des Galilei-Fernrohrs im Vergrößerungswechsler "bezahlt" wird.

Derselbe automatische Anpassungseffekt kann, wie man sich anhand der Figuren 10a und 10b für den ersten Beobachtungskanal 100 verdeutlicht, auch bei einem pankratischen Zoomobjektiv erreicht werden, wenn man im Beobachtungskanal zusätzlich zur ersten Blende 160 eine weitere Blende 320 mit zur Durchlassöffnung 161 der ersten Blende 160 kongruenter Durchlassöffnung 321 so beweglich anordnet, dass bei eingestellter minimaler Vergrößerung die jeweiligen Halbachsen H_{g}a und Hₖa der Blenden 160 und 320 aufeinander senkrecht stehen und bei eingestellter maximaler Vergrößerung die jeweiligen Halbachsen H_{g}a und Hₖa der Blenden 160 und 320 parallel zueinander verlaufen. Wie die Figuren 10a und 10b, die zwei dazwischen liegende Positionen zeigen, erkennen lassen, steigt dann mit steigender Vergrößerung automatisch die Apertur des Systems, während sie sich bei sinkender Vergrößerung verringert und somit im erstgenannten Fall die erreichbare Auflösung verbessert und im letztgenannten Fall die Schärfentiefe und somit die räumliche Abbildung erhöht wird.

### Bezugszeichenliste

- 10: Stereomikroskop
- 100: erster Beobachtungskanal
- 101,201: Auge des Betrachters
- 110,210: Okular
- 120,220: Tubussystem
- 121,221: Prisma
- 122,222: Tubuslinse
- 130,230: Vergrößerungswechsler
- 131,132,231,232: Linsen
- 137,237: Drehachse
- 138: Ansteuerung
- 138a bis d: Linsen
- 140: gemeinsames Objektiv
- 150: Objektebene
- 160,160a,160b,160c: Blende
- 161,161a,161b,161c: Durchlassöffnung
- 170,270: verstellbare Irisblende
- 200: zweiter Beobachtungskanal
- 238a bis d: Linsen
- 260: zweite Blende
- 261,261a: Durchlassöffnung
- 300: Trommel
- 301,302: Sammellinsen
- 304,305: Streulinsen
- 303,306: Öffnung
- 311,312,313,314, 315,316,320,321: weitere Blende
- α: Stereowinkel
- β: Winkel
- H_{g},H_{g}a,H_{g}b,H_{g}c: große Halbachse
- H_{g}',H_{g}a',H_{g}b',H_{g}c': große Halbachse
- Hₖ,Hₖa,Hₖb_{,}Hₖc: kleine Halbachse
- Hₖ',Hₖa',Hₖb',Hₖc': kleine Halbachse
- s1,s2: Spiegelachse

## Patentansprüche

1. Optisches Gerät zur Erzeugung von Bildern mit räumlichem Eindruck mit einem ersten Beobachtungskanal (100) und einem gleichzeitig vorhandenen oder im zeitlichen Wechsel mit dem ersten Beobachtungskanal (100) bereitstellbaren zweiten Beobachtungskanal (200),
**dadurch gekennzeichnet, dass** im ersten Beobachtungskanal (100) eine erste Blende (160) mit einer ersten Durchlassöffnung (161) angeordnet ist, wobei die erste Durchlassöffnung (161) eine erste große Halbachse (H_{g},H_{g}a,H_{g}b,H_{g}c) und eine zur ersten großen Halbachse (H_{g},H_{g}a,H_{g}b,H_{g}c) senkrecht stehende erste kleine Halbachse (Hₖ,Hₖa,Hₖb,Hₖc) aufweist, so dass die Ausdehnung der ersten Durchlassöffnung (161) in Richtung der ersten großen Halbachse (H_{g},H_{g}a,H_{g}b,H_{g}c) größer ist als die Ausdehnung der ersten Durchlassöffnung (161) in Richtung der ersten kleinen Halbachse (Hₖ, Hₖa, Hₖb_{,} Hₖc),
dass im zweiten Beobachtungskanal (200) eine zweite Blende (260) mit einer zweiten Durchlassöffnung (261) angeordnet ist, wobei die zweite Durchlassöffnung (261) eine zweite große Halbachse (H_{g}',H_{g}a',H_{g}b',H_{g}c') und eine zur zweiten großen Halbachse (H_{g}',H_{g}a',H_{g}b',H_{g}c') senkrecht stehende zweite kleine Halbachse (Hₖ',Hₖa',Hₖb',Hₖc') aufweist, so dass die Ausdehnung der Durchlassöffnung (261) in Richtung der zweiten großen Halbachse (H_{g}',H_{g}a',H_{g}b',H_{g}c') größer ist als die Ausdehnung der Durchlassöffnung (261) in Richtung der zweiten kleinen Halbachse (Hₖ',Hₖa',Hₖb',Hₖc'), und
dass die erste große Halbachse (H_{g},H_{g}a,H_{g}b,H_{g}c) parallel zu der zweiten kleinen Halbachse (Hₖ',Hₖa',Hₖb',Hₖc')verläuft und die zweite große Halbachse (H_{g}',H_{g}a',H_{g}b',H_{g}c') parallel zur ersten kleinen Halbachse (Hₖ,Hₖa,Hₖb_{,}Hₖc) verläuft.

2. Optisches Gerät zur Erzeugung von Bildern mit räumlichem Eindruck nach Anspruch 1,
**dadurch gekennzeichnet, dass** die erste Durchlassöffnung (161) und die zweite Durchlassöffnung (261) kongruent sind.

3. Optisches Gerät zur Erzeugung von Bildern mit räumlichem Eindruck nach Anspruch 1 oder 2,
**dadurch gekennzeichnet, dass** die erste Durchlassöffnung (161) und die zweite Durchlassöffnung (261) jeweils die Form einer Ellipse haben.

4. Optisches Gerät zur Erzeugung von Bildern mit räumlichem Eindruck nach einem der Ansprüche 1 bis 3,
**dadurch gekennzeichnet, dass** die Länge der ersten großen Halbachse (H_{g},H_{g}a,H_{g}b,H_{g}c) und die Länge der zweiten großen Halbachse (H_{g}',H_{g}a',H_{g}b',H_{g}c') jeweils dem freien Linsendurchmesser (d) entsprechen.

5. Optisches Gerät zur Erzeugung von Bildern mit räumlichem Eindruck nach einem der Ansprüche 1 bis 4,
**dadurch gekennzeichnet, dass** das Verhältnis der ersten großen Halbachse (H_{g},H_{g}a,H_{g}b,H_{g}c) zur ersten kleinen Halbachse (Hₖ,Hₖa,Hₖb,Hₖc) und/oder das Verhältnis der zweiten großen Halbachse (H_{g}',H_{g}a',H_{g}b',H_{g}c') zur zweiten kleinen Halbachse (Hₖ',Hₖa',Hₖb',Hₖc') 2:1 ist.

6. Optisches Gerät zur Erzeugung von Bildern mit räumlichem Eindruck nach einem der vorstehenden Ansprüche,
**dadurch gekennzeichnet, dass** das optische Gerät ein Stereomikroskop (10) mit einem ersten Beobachtungskanal (100) für das eine Auge (101) eines Benutzers und einem zweiten Beobachtungskanal(200) für das zweite Auge (201) des Benutzers ist.

7. Optisches Gerät zur Erzeugung von Bildern mit räumlichem Eindruck nach Anspruch 6,
**dadurch gekennzeichnet, dass** das optische Gerät im ersten Beobachtungskanal (100) als Vergrößerungswechsler (130) ein erstes pankratisches Zoomobjektiv zur Variation der Vergrößerung des optischen Geräts durch Änderung der Position von im pankratischen Zoomobjektiv vorhandenen optischen Elementen aufweist und im zweiten Beobachtungskanal (200) als Vergrößerungswechsler (230) ein zweites pankratisches Zoomobjektiv zur Variation der Vergrößerung des optischen Geräts (10) durch Änderung der Position von im pankratischen Zoomobjektiv vorhandenen optischen Elementen aufweist.

8. Optisches Gerät zur Erzeugung von Bildern mit räumlichem Eindruck nach Anspruch 6 oder 7,
**dadurch gekennzeichnet, dass** im ersten Beobachtungskanal (100) und im zweiten Beobachtungskanal (200) jeweils eine weitere Blende (320) vorhanden ist, wobei deren Durchlassöffnung jeweils kongruent zu der Durchlassöffnung (161) der ersten Blende (160) und/oder kongruent zu der Durchlassöffnung (261) der zweiten Blende (260) ist,
wobei die weiteren Blenden (320) jeweils um eine senkrecht auf ihrer Durchlassöffnung (321) stehende, im Mittelpunkt der Blende (320) angeordnete Mittelsenkrechte drehbar gelagert sind,
so dass der Winkel (β) zwischen der großen Halbachse (H_{g}) der Durchlassöffnung (161) der ersten Blende (160) und der großen Halbachse (H_{g}') der Durchlassöffnung (321) der im ersten Beobachtungskanal (100) angeordneten weiteren Blende (321) und der Winkel zwischen der großen Halbachse der Durchlassöffnung (261) der zweiten Blende (260) und der großen Halbachse der Durchlassöffnung der im zweiten Beobachtungskanal (200) angeordneten weiteren Blende in Abhängigkeit von der eingestellten Vergrößerung veränderbar sind,
und zwar so, dass bei maximaler Vergrößerung die große Halbachse (H_{g}') der Durchlassöffnung (321) der im ersten Beobachtungskanal (100) angeordneten weitere Blende (320) parallel zur großen Halbachse (H_{g}) der Durchlassöffnung (161) der ersten Blende (160) verläuft und die große Halbachse der Durchlassöffnung der im zweiten Beobachtungskanal (200) angeordneten weiteren Blende parallel zur großen Halbachse der Durchlassöffnung (261) der zweiten Blende (260) verläuft, während bei minimaler Vergrößerung die große Halbachse (H_{g}') der Durchlassöffnung (321) der im ersten Beobachtungskanal (100) angeordneten weitere Blende (320) senkrecht zur großen Halbachse (H_{g}) der Durchlassöffnung (161) der ersten Blende (160) verläuft und die große Halbachse der Durchlassöffnung der im zweiten Beobachtungskanal (200) angeordneten weiteren Blende senkrecht zur großen Halbachse der Durchlassöffnung (261) der zweiten Blende (260) verläuft.

9. Optisches Gerät zur Erzeugung von Bildern mit räumlichem Eindruck nach Anspruch 6,
**dadurch gekennzeichnet, dass** das optische Gerät einen Vergrößerungswechsler aufweist, der als drehbare Trommel (300) mit paarig und zur Nutzung auf Umschlag angeordneten Galileifernrohren mit einer Sammellinse (301,302) und einer Streulinse (304,305) ausgeführt ist, so dass durch Drehung der Trommel (300) jeweils ein anderes Paar von Galileifernrohren in den ersten Beobachtungskanal (100) und zweiten Beobachtungskanal (200) hineingedreht werden kann.

10. Optisches Gerät zur Erzeugung von Bildern mit räumlichem Eindruck nach Anspruch 9,
**dadurch gekennzeichnet, dass** auf den Sammellinsen (301,302) und/oder auf einer Öffnung (303,306) der paarig angeordneten Galileifernrohre weitere Blenden (311,312,313, 314,315,316) so angeordnet sind, und dass in der Position der Trommel (300), in der das jeweils in den Strahlengang des optischen Geräts (10) eingebrachte eingestellte Paar von Galileifernrohren vergrößert, die große Halbachse der Durchlassöffnung der im ersten Beobachtungskanal (100) angeordneten weitere Blende (311,312,313) parallel zur großen Halbachse der Durchlassöffnung (161) der ersten Blende (160) verläuft und die große Halbachse der Durchlassöffnung der im zweiten Beobachtungskanal (200) angeordneten weiteren Blende (314,315,316) parallel zur großen Halbachse der Durchlassöffnung (261) der zweiten Blende (260) verläuft.

## Claims

1. Optical device for generating images with a three-dimensional effect comprising a first observation channel (100) and a second observation channel (200) which can be present simultaneously or provided so as to alternate at intervals with the first observation channel (100), **characterised in that**
a first diaphragm (160) having a first through opening (161) is arranged in the first observation channel (100), wherein the first through opening (161) has a first large half-axis (Hg, Hga, Hgb, Hgc) and a first small half-axis (Hk, Hka, Hkb, Hkc) perpendicular to the first large half-axis (Hg, Hga, Hgb, Hgc), so that the dimension of the first through opening (161) in the direction of the first large half-axis (Hg, Hga, Hgb, Hgc) is greater than the dimension of the first through opening (161) in the direction of the first small half-axis (Hk, Hka, Hkb, Hkc),
**in that** a second diaphragm (260) having a second through opening (261) is arranged in the second observation channel (200), wherein the second through opening (261) has a second large half-axis (Hg', Hga', Hgb', Hgc') and a second small half-axis (Hk', Hka', Hkb', Hkc') perpendicular to the second large half-axis (Hg', Hga', Hgb', Hgc'), so that the dimension of the through opening (261) in the direction of the second large half-axis (Hg', Hga', Hgb', Hgc') is greater than the dimension of the through opening (261) in the direction of the second small half-axis (Hk', Hka', Hkb', Hkc'), and
**in that** the first large half-axis (Hg, Hga, Hgb, Hgc) extends parallel to the second small half-axis (Hk', Hka', Hkb', Hkc') and the second large half-axis (Hg', Hga', Hgb', Hgc') extends parallel to the first small half-axis (Hk, Hka, Hkb, Hkc).

2. Optical device for generating images with a three-dimensional effect according to claim 1, **characterised in that** the first through opening (161) and the second through opening (261) are congruent.

3. Optical device for generating images with a three-dimensional effect according to claim 1 or 2, **characterised in that** the first through opening (161) and the second through opening (261) each have the shape of an ellipse.

4. Optical device for generating images with a three-dimensional effect according to one of claims 1 to 3, **characterised in that** the length of the first large half-axis (Hg, Hga, Hgb, Hgc) and the length of the second large half-axis (Hg', Hga', Hgb', Hgc') each correspond to the free lens diameter (d).

5. Optical device for generating images with a three-dimensional effect according to one of claims 1 to 4, **characterised in that** the ratio of the first large half-axis (Hg, Hga, Hgb, Hgc) to the first small half-axis (Hk, Hka, Hkb, Hkc) and/or the ratio of the second large half-axis (Hg', Hga', Hgb', Hgc') to the second small half-axis (Hk', Hka', Hkb', Hkc') is 2:1.

6. Optical device for generating images with a three-dimensional effect according to one of the preceding claims, **characterised in that** the optical device is a stereomicroscope (10) with a first observation channel (100) for one eye (101) of a user and a second observation channel (200) for the second eye (201) of the user.

7. Optical device for generating images with a three-dimensional effect according to claim 6, **characterised in that** the optical device in the first observation channel (100) has. as magnification changer (130), a first pancratic zoom lens for changing the magnification of the optical device by changing the position of optical elements present in the pancratic zoom lens, and in the second observation channel (200) has, as magnification changer (230), a second pancratic zoom lens for varying the magnification of the optical device (10) by changing the position of optical elements present in the pancratic zoom lens.

8. Optical device for generating images with a three-dimensional effect according to claim 6 or 7, **characterised in that** a respective further diaphragm (320) is present in the first observation channel (100) and in the second observation channel (200), wherein the through opening thereof is in each case congruent with the through opening (161) of the first diaphragm (160) and/or congruent with the through opening (261) of the second diaphragm (260), wherein the further diaphragms (320) are in each case rotatably mounted about a perpendicular bisector arranged upright on the through opening (321) at the centre point of the diaphragm (320), so that the angle (β) between the large half-axis (Hg) of the through opening (161) of the first diaphragm (160) and the large half-axis (Hg') of the through opening (321) of the further diaphragm (321) in the first observation channel (100) and the angle between the large half-axis of the through opening (261) of the second diaphragm (260) and the large half-axis of the through opening of the further diaphragm arranged in the second observation channel (200) can be changed according to the set magnification, so that at the maximum enlargement the large half-axis (Hg') of the through opening (321) of the further diaphragm (320) arranged in the first observation channel (100) extends parallel to the large half-axis (Hg) of the through opening (161) of the first diaphragm (160) and the large half-axis of the through opening of the further diaphragm arranged in the second observation channel (200) extends parallel to the large half-axis of the through opening (261) of the second diaphragm (260), whereas at the minimum enlargement the large half-axis (Hg') of the through opening (321) of the further diaphragm (320) arranged in the first observation channel (100) extends perpendicular to the large half-axis (Hg) of the through opening (161) of the first diaphragm (160) and the large half-axis of the through opening of the further diaphragm arranged in the second observation channel (200) extends perpendicular to the large half-axis of the through opening (261) of the second diaphragm (260).

9. Optical device for generating images with a three-dimensional effect according to claim 6, **characterised in that** the optical device has a magnification changer which is designed as a rotatable drum (300) with pairs of Galilean telescopes arranged to work in reverse configuration, with a convergent lens (301, 302) and a divergent lens (304, 305), so that by rotation of the drum (300) another pair of Galilean telescopes can be rotated into the first observation channel (100) and the second observation channel (200).

10. Optical device for generating images with a three-dimensional effect according to claim 9, **characterised in that** further diaphragms (311, 312, 313, 314, 315, 316) are arranged on the convergent lenses (301, 302) and/or on an opening (303, 306) of the pair of Galilean telescopes, and **in that** in the position of the drum (300) in which the respective pair of Galilean telescopes introduced into the beam path of the optical device (10) magnifies, so that the large half-axis of the through opening of the further diaphragm (311, 312, 313) arranged in the first observation channel (100) extends parallel to the large half-axis of the through opening (161) of the first diaphragm (160) and the large half-axis of the through opening of the further diaphragm (314, 315, 316) arranged in the second observation channel (200) extends parallel to the large half-axis of the through opening (261) of the second diaphragm (260).

## Revendications

1. Appareil optique permettant l'obtention d'images avec une impression tridimensionnelle comprenant un premier canal d'observation (100) et un second canal d'observation (200) présent simultanément ou disponible en alternance temporelle avec le premier canal d'observation (100), **caractérisé en ce que**
dans le premier canal d'observation (100) est monté un premier diaphragme (160) ayant une première ouverture de passage (161), la première ouverture de passage (161) ayant un premier grand demi-axe (H_{g}, H_{g}a, H_{g}b, H_{g}c) et un premier petit demi-axe (Hₖ, Hₖa, Hₖb, Hₖc) perpendiculaire au premier grand demi-axe (H_{g}, H_{g}a, H_{g}b, H_{g}c) de sorte que l'extension de la première ouverture de passage (161) dans la direction du premier grand demi-axe (H_{g}, H_{g}a, H_{g}b, H_{g}c) soit supérieure à l'extension de la première ouverture de passage (161) dans la direction du premier petit axe (Hₖ, Hₖa, Hₖb, Hₖc),
dans le second canal d'observation (200) est monté un second diaphragme (260) ayant une seconde ouverture de passage (261), la seconde ouverture de passage (261) ayant un second grand demi-axe (H_{g}', H_{g}a', H_{g}b', H_{g}c') et un second petit demi-axe (Hₖ', Hₖa', Hₖb', Hₖc)' perpendiculaire au second grand demi-axe ((H_{g}', H_{g}a', H_{g}b', H_{g}c') de sorte que l'extension de la seconde ouverture de passage (261) dans la direction du second grand demi-axe (H_{g}', H_{g}a', H_{g}b', H_{g}c') soit supérieure à l'extension de l'ouverture de passage (261) dans la direction du second petit demi-axe (Hₖ', Hₖa', Hₖb', Hₖc'), et
le premier grand demi-axe (H_{g}, H_{g}a, H_{g}b, H_{g}c) s'étend parallèlement au second petit demi-axe (Hₖ', Hₖa', Hₖb', Hₖc'), et le second grand demi-axe (H_{g}', H_{g}a', H_{g}b', H_{g}c') s'étend parallèlement au premier petit demi-axe (Hₖ, Hₖa, Hₖb, Hₖc).

2. Appareil optique permettant l'obtention d'images avec une impression tridimensionnelle conforme à la revendication 1,
**caractérisé en ce que**
la première ouverture de passage (161) et la seconde ouverture de passage (261) sont coïncidentes.

3. Appareil optique permettant l'obtention d'images avec une impression tridimensionnelle conforme à la revendication 1 ou 2,
**caractérisé en ce que**
la première ouverture de passage (161) et la seconde ouverture de passage (261) ont chacune la forme d'une ellipse.

4. Appareil optique permettant l'obtention d'images avec une impression tridimensionnelle conforme à l'une des revendications 1 à 3,
**caractérisé en ce que**
la longueur du premier grand demi-axe (H_{g}, H_{g}a, H_{g}b, H_{g}c) et la longueur du second grand demi-axe (H_{g}', H_{g}a', H_{g}b', H_{g}c') correspondent chacune au diamètre libre (d) d'une lentille.

5. Appareil optique permettant l'obtention d'images avec une impression tridimensionnelle conforme à l'une des revendications 1 à 4,
**caractérisé en ce que**
le rapport du premier grand demi-axe (H_{g}, H_{g}a, H_{g}b, H_{g}c) au premier petit demi-axe (Hₖ, Hₖa, Hₖb, Hₖc) et/ou le rapport du second grand demi-axe (H_{g}', H_{g}a', H_{g}b', H_{g}c') au second petit demi-axe (Hₖ', Hₖa', Hₖb', Hₖc') est égal à 2 :1.

6. Appareil optique permettant l'obtention d'images avec une impression tridimensionnelle conforme à l'une des revendications précédentes,
**caractérisé en ce qu'**
il est constitué par un stéréomicroscope (10) ayant un premier canal d'observation (100) pour l'un des yeux (101) d'un utilisateur et un second canal d'observation (200) pour l'autre oeil (201) de l'utilisateur.

7. Appareil optique permettant l'obtention d'images avec une impression tridimensionnelle conforme à la revendication 6,
**caractérisé en ce qu'**
il comporte, dans le premier canal d'observation (100), en tant que changeur de grossissement (130) un premier objectif zoom afocal permettant de modifier le grossissement de l'appareil optique par modification de la position d'éléments optiques montés dans l'objectif zoom afocal, et, dans le second canal d'observation (200), en tant que changeur de grossissement (230) un second objectif zoom afocal permettant de modifier le grossissement de l'appareil optique (10) par modification de la position d'éléments optiques montés dans l'objectif zoom afocale.

8. Appareil optique permettant l'obtention d'images avec une impression tridimensionnelle conforme à la revendication 6 ou 7,
**caractérisé en ce que**
dans le premier canal d'observation (100) et dans le second canal d'observation (200) il respectivement prévu un autre diaphragme (320) dont les ouvertures de passage coïncident respectivement avec l'ouverture de passage (161) du premier diaphragme (160) et/ou l'ouverture de passage (261) du second diaphragme (260),
les autres diaphragmes (320) sont respectivement montés mobiles en rotation autour d'une médiatrice perpendiculaire à leur ouverture de passage (321) située au centre du diaphragme (320), de sorte que l'angle (β) entre le grand demi-axe (H_{g}) de l'ouverture de passage (161) du premier diaphragme (160) et le grand demi-axe (H_{g}') de l'ouverture de passage (321) de l'autre diaphragme (321) monté dans le premier canal d'observation (100) et l'angle entre le grand demi-axe de l'ouverture de passage (261) du second diaphragme (260) et le grand demi-axe de l'ouverture de passage de l'autre diaphragme monté dans le second canal d'observation (200) puissent varier en fonction du grossis sement réglé, et, ce de sorte que, pour le grossissement maximum, le grand demi-axe (H_{g}') de l'ouverture de passage (321) de l'autre diaphragme (320) monté dans le premier canal d'observation (100) s'étende parallèlement au grand demi-axe (H_{g}) de l'ouverture de passage (161) du premier diaphragme (160), et que le grand demi-axe de l'ouverture de passage de l'autre diaphragme monté dans le second canal d'observation (200) s'étende parallèlement au grand demi-axe de l'ouverture de passage (261) du second diaphragme (260), et que pour le grossissement minimum, le grand demi-axe (H_{g}') de l'ouverture de passage (321) de l'autre diaphragme monté dans le premier canal d'observation (100) s'étende perpendiculairement au grand demi-axe (H_{g}) de l'ouverture de passage (161) du premier diaphragme (160) et que le grand demi-axe de l'ouverture de passage de l'autre diaphragme (320) monté dans le second canal d'observation (200) s'étende perpendiculairement au grand demi-axe de l'ouverture de passage (261) du second diaphragme (260).

9. Appareil optique permettant l'obtention d'images avec une impression tridimensionnelle conforme à la revendication 6,
**caractérisé en ce qu'**
il comporte un changeur de grossissement qui est réalisé sous la forme d'un tambour rotatif (300) équipé de lunettes de Galilée appariées et montées pour permettre une utilisation réversible, avec une lentille convergente (301, 302) et une lentille divergente, (304, 305), de sorte que par rotation du tambour (300), une autre paire respective de lunettes de Galilée puisse être introduite par rotation dans le premier canal d'observation (100) et dans le second canal d'observation (200).

10. Appareil optique permettant l'obtention d'images avec une impression tridimensionnelle conforme à la revendication 9,
**caractérisé en ce que**
sur les lentilles convergentes (301, 302) et/ou sur une ouverture (303, 306) des lunettes de Galilée appariées, sont montés d'autres diaphragmes (311, 312, 313, 314, 315, 316), et dans la position du tambour (300) dans laquelle la paire respective de lunettes de Galilée (10) introduite dans le trajet optique de l'appareil optique grossit, le grand demi-axe de l'ouverture de passage de l'autre diaphragme (311, 312, 313) situé dans le premier canal d'observation (100) s'étend parallèlement au grand demi-axe de l'ouverture de passage (161) du premier diaphragme (160), et le grand demi-axe de l'ouverture de passage de l'autre diaphragme (314, 315, 316) situé dans le second canal d'observation (200) s'étend parallèlement au grand demi-axe de l'ouverture de passage (261) du second diaphragme (260).
